# EUROPEAN PATENT APPLICATION

(11) **EP 4 664 449 A1**
(43) Date of publication of application: **17.12.2025**
(21) Application number: 23922526.1
(22) Date of filing: 26.12.2023
(51) Int. Cl.: G10L 15/00, G10L 15/22, G06F 1/32, G06F 1/3206

(54) **VOICE WAKE-UP METHOD AND APPARATUS, ELECTRONIC DEVICE, STORAGE MEDIUM, AND PRODUCT**

(30) Priority: 15.02.2023 CN 202310129702
(71) Applicant: GUANGDONG OPPO MOBILE TELECOMMUNICATIONS CORP., LTD., Dongguan, Guangdong 523860 (CN)
(72) Inventor: FENG, Xunli, Dongguan, Guangdong 523860 (CN)
(74) Representative: Novagraaf Technologies
(86) International application number: PCT/CN2023/141799
(87) International publication number: WO 2024/169411

(57) **Abstract**

The present application relates to the technical field of voice signal processing, and provides a voice wake-up method and apparatus, an electronic device, a storage medium, and a product. The method is executed by an electronic device, the electronic device comprises a first core controller and a second core controller, the first core controller is used for running a first operating system, and the second core controller is used for running a second operating system. The method comprises: when the first operating system is in an active state and the second operating system is in a dormant state, acquiring first audio data on the basis of the first operating system; recognizing the first audio data on the basis of a voice wake-up algorithm controlled by the first operating system; and when it is recognized that the first audio data meets a wake-up condition, waking up the second operating system, wherein the second operating system is used for responding to, in an active state, a voice control instruction corresponding to second audio data. The present application can reduce the power consumption of the electronic device.

## Description

The present application claims priority of Chinese Patent Application No. 202310129702.9, in the title of "VOICE WAKE-UP METHOD AND APPARATUS, ELECTRONIC DEVICE, STORAGE MEDIUM, AND PRODUCT", filed on February 15, 2023, the entire contents of which are hereby incorporated by reference in their entirety.

### TECHNICAL FIELD

The present disclosure relates to the field of voice signal processing technologies, particularly to a voice wake-up method, an apparatus, an electronic device, a storage medium, and a product.

### BACKGROUND

Voice wake-up refers to a process, where a voice wake-up algorithm detects captured audio signals to determine whether they contain a target wake word, and when the target wake word is detected, the electronic device is activated, enabling users to control it via voice commands.

Currently, the voice wake-up technology is widely applied in electronic devices such as smartphones, smart home devices, and smart wearable devices.

### SUMMARY OF THE DISCLOSURE

Embodiments of the present disclosure provide a voice wake-up method, an apparatus, an electronic device, a storage medium, and a product that may reduce the power consumption of electronic devices.

In a first aspect, the present disclosure provides a voice wake-up method, performed by an electronic device; wherein the electronic device includes a first core controller and a second core controller; the first core controller is configured to run a first operating system, and the second core controller is configured to run a second operating system; the voice wake-up method includes:
obtaining first audio data based on the first operating system, in a case where the first operating system is in an active state and the second operating system is in a sleep state;
recognizing the first audio data based on a voice wake-up algorithm controlled by the first operating system; and
in a case where it is identified that the first audio data satisfies a wake-up condition, waking up the second operating system; wherein the second operating system is configured to, in an active state, respond to a voice control command corresponding to second audio data.

In a second aspect, the present disclosure provides a voice wake-up apparatus, deployed in an electronic device; wherein the electronic device includes a first core controller and a second core controller; the first core controller is configured to run a first operating system, and the second core controller is configured to run a second operating system; the voice wake-up apparatus includes:
an obtaining module, configured to obtain first audio data based on the first operating system, in a case where the first operating system is in an active state and the second operating system is in a sleep state;
a recognition module, configured to recognize the first audio data based on a voice wake-up algorithm controlled by the first operating system; and
a wake-up module, configured to wake up the second operating system in a case where it is identified that the first audio data satisfies a wake-up condition; wherein the second operating system is configured to, in an active state, respond to a voice control command corresponding to second audio data.

In a third aspect, the present disclosure provides an electronic device, including a first core controller and a second core controller; wherein the first core controller is configured to run a first operating system, and the second core controller configured to run a second operating system; the electronic device further includes one or more processors and one or more memories, the one or more memories storing at least one program code; wherein the at least one program code is configured to be loaded and executed by the one or more processors to perform the voice wake-up method as above.

In a fourth aspect, the present disclosure a computer-readable storage medium, storing at least one program code; wherein the at least one program code is configured to be loaded and executed by a processor to perform the voice wake-up method as above.

In a fifth aspect, the present disclosure a computer program product, storing at least one program code; wherein the at least one program code is configured to be loaded and executed by a processor to perform the voice wake-up method as above.

### BRIEF DESCRIPTION OF THE DRAWINGS

FIG. 1 is a circuit diagram of an electronic device according to some embodiments of the present disclosure.
FIG. 2 is a circuit diagram of an electronic device according to other embodiments of the present disclosure.
FIG. 3 is a circuit diagram of an electronic device according to further other embodiments of the present disclosure.
FIG. 4 is a circuit diagram of an electronic device according to still other embodiments of the present disclosure.
FIG. 5 is a flowchart of a voice wake-up method according to some embodiments of the present disclosure.
FIG. 6 is a flowchart of a voice wake-up method according to other embodiments of the present disclosure.
FIG. 7 is a schematic diagram of a voice wake-up method according to some embodiments of the present disclosure.
FIG. 8 is a flowchart of a voice wake-up method according to further other embodiments of the present disclosure.
FIG. 9 is a flowchart of a method for determining on which device to run a voice wake-up algorithm according to some embodiments of the present disclosure.
FIG. 10 is a flowchart of a voice wake-up method according to still other embodiments of the present disclosure.
FIG. 11 is a flowchart of a voice wake-up method according to still other embodiments of the present disclosure.
FIG. 12 is a block diagram of a voice wake-up apparatus according to some embodiments of the present disclosure.
FIG. 13 is a block diagram of an electronic device according to some embodiments of the present disclosure.

### DETAILED DESCRIPTION

To make the objectives, technical solutions, and advantages of the present disclosure clearer, the implementations of the present disclosure will be further described in detail below with reference to the accompanying drawings.

The term "a plurality" as mentioned herein refers to two or more. "And/or" describes an association relationship between associated objects, indicating that three relationships may exist. For example, A and/or B may represent: A exists alone, both A and B exist simultaneously, or B exists alone. The character "/" generally indicates that the associated objects before and after it are in an "or" relationship.

In some embodiments of the present disclosure, information (including but not limited to user equipment information, user personal information, etc.), data (including but not limited to data used for analysis, stored data, displayed data, etc.), and signals involved in the present disclosure are all authorized by the user or fully authorized by all parties. The collection, use, and processing of relevant data must comply with relevant laws, regulations, and standards of the relevant countries and regions. For example, the first audio data and second audio data involved in the present disclosure are obtained under full authorization.

In the embodiments of the present disclosure, the following technical solutions are provided.

A voice wake-up method, performed by an electronic device; wherein the electronic device includes a first core controller and a second core controller; the first core controller is configured to run a first operating system, and the second core controller is configured to run a second operating system; the voice wake-up method includes:
obtaining first audio data based on the first operating system, in a case where the first operating system is in an active state and the second operating system is in a sleep state;
recognizing the first audio data based on a voice wake-up algorithm controlled by the first operating system; and
in a case where it is identified that the first audio data satisfies a wake-up condition, waking up the second operating system; wherein the second operating system is configured to, in an active state, respond to a voice control command corresponding to second audio data.

In some embodiments,
the method further includes: running the voice wake-up algorithm on the first core controller; or,
the electronic device further includes an audio codec electrically connected to the first core controller, and the method further includes: running the voice wake-up algorithm on the audio codec.

In some embodiments, the first core controller is configured to run the voice wake-up algorithm; the electronic device further includes an audio codec and a first audio collection component, an output end of the first audio collection component is electrically connected to an input end of the audio codec, and an output end of the audio codec is electrically connected to an input end of the first core controller;
wherein the obtaining first audio data based on the first operating system includes:
obtaining a first sound signal collected by the first audio collection component through the audio codec, converting the first sound signal into the first audio data, and inputting the first audio data to the first core controller.

In some embodiments, the obtaining a first sound signal collected by the first audio collection component through the audio codec includes:
switching a working mode of the audio codec from a first working mode to a second working mode in a case where a preset condition for running the voice wake-up algorithm is satisfied; and
controlling the audio codec to obtain the first sound signal collected by the first audio collection component in the second working mode;
wherein power consumption of the audio codec in the second working mode is lower than power consumption of the audio codec in the first working mode.

In some embodiments, the first core controller is configured to determine whether the preset condition for running the voice wake-up algorithm is satisfied, and the preset condition includes at least one of:
a voice wake-up switch of the electronic device being in an on state;
control authority of the first audio collection component residing in the first core controller;
a screen of the electronic device being in a lit state; and
no voice task with a priority higher than a voice wake-up task existing.

In some embodiments, after the waking up the second operating system, the audio codec is in an off state or a sleep state.

In some embodiments, the electronic device further includes a switching switch, a fixed end of the switching switch is electrically connected to the output end of the first audio collection component, and a switching end of the switching switch is configured to be electrically connected to the second core controller or the audio codec;
the method further includes:
controlling the switching end of the switching switch to switch from being electrically connected to the audio codec to being electrically connected to the second core controller; and
based on the second operating system run on the second core controller, receiving a second sound signal collected by the first audio collection component, converting the second sound signal into the second audio data, recognizing a voice control command corresponding to the second audio data, and responding to the voice control command.

In some embodiments, the electronic device further includes a second audio collection component, and the second core controller is electrically connected to an output end of the second audio collection component;
the method further includes:
based on the second operating system run on the second core controller, receiving a second sound signal collected by the second audio collection component, converting the second sound signal into the second audio data, recognizing a voice control command corresponding to the second audio data, and responding to the voice control command.

In some embodiments, the audio codec is configured to run the voice wake-up algorithm, and the waking up the second operating system includes:
sending a wake-up request to the second core controller through the audio codec; wherein the wake-up request is configured to request waking up the second operating system run on the second core controller; or,
sending a wake-up request to the first core controller through the audio codec, and forwarding the wake-up request to the second core controller by the first core controller; wherein the wake-up request is configured to request waking up the second operating system run on the second core controller.

In some embodiments, the method further includes:
determining first operation condition information of the first core controller and second operation condition information of the audio codec; wherein the first operation condition information is configured to represent conditions for the first core controller to run the voice wake-up algorithm, and the second operation condition information is configured to represent conditions for the audio codec to run the voice wake-up algorithm;
in a case where the operation conditions represented by the first operation condition information are superior to the operation conditions represented by the second operation condition information, running the voice wake-up algorithm on the first core controller; and
in a case where the operation conditions represented by the first operation condition information are not superior to the operation conditions represented by the second operation condition information, running the voice wake-up algorithm on the audio codec.

In some embodiments, the method further includes:
after the waking up the second operating system, switching the first operating system from the active state to a sleep state or a background running state.

In some embodiments, the method further includes:
after the voice control command is completely processed, switching the first operating system from the sleep state to the active state, and switching the second operating system from the active state to the sleep state; or,
after the voice control command is completely processed, switching the first operating system from the background running state to a foreground running state, and switching the second operating system from the active state to the sleep state.

In some embodiments, the voice wake-up method provided by the present disclosure is executed by an electronic device including a first core controller and a second core controller, where the first core controller is configured to run a first operating system, the second core controller is configured to run a second operating system, and the power consumption of the first core controller running the first operating system is lower than the power consumption of the second core controller running the second operating system. For example, the first operating system may be a real-time operating system (RTOS), and the second operating system may be the Android operating system. The electronic device may be any device with voice wake-up functionality; for example, the electronic device may be a smartphone, tablet, smart home device, or smart wearable device. Unlike smartphones and smart home devices, smart wearable devices have higher power consumption requirements. The voice wake-up algorithm to detect target wake-up words is required to run in the background of the smart wearable device, which consumes a significant amount of power from the smart wearable device, thereby increasing its power consumption. In the embodiments of the present disclosure, by configuring a first core controller and a second core controller in the electronic device and running two operating systems via the first core controller and the second core controller, during the voice wake-up stage, the voice wake-up algorithm is controlled by the first operating system, such that the first operating system remains in an active state; while the second operating system remains in a sleep state. Once first audio data satisfying the wake-up condition is received, the second operating system is awakened, thereby reducing the power consumption of the electronic device. In other words, the present disclosure may reduce the power consumption of the electronic device.

The following describes hardware devices involved in the embodiments of the present disclosure.

Audio codec (CODEC): a device with audio signal processing capability, which may be a digital signal processing (DSP) core in the electronic device.

In some embodiments of the present disclosure, when the first operating system is in the active state and the second operating system is in the sleep state, the audio codec may collect audio data and may also run the voice wake-up algorithm. Based on the voice wake-up algorithm, it is identified whether the audio data satisfies a wake-up condition, and when the audio data satisfies the wake-up condition, the second operating system is awakened.

Exemplarily, the wake-up condition includes at least one of the following: containing a target wake word, a voiceprint of the audio data being a target voiceprint, or an audio intensity of the audio data exceeding a preset intensity.

For example, when the wake-up condition is containing a target wake word, based on the voice wake-up algorithm, it is identified whether the audio data contains the target wake word. When the audio data contains the target wake word, it is determined that the audio data satisfies the wake-up condition; when the audio data does not contain the target wake word, it is determined that the audio data does not satisfy the wake-up condition.

For another example, when the wake-up condition is a voiceprint of the audio data being a target voiceprint, and the target voiceprint is a voiceprint of the owner or authorized person of the electronic device, based on the voice wake-up algorithm, it is identified whether the voiceprint of the audio data is the target voiceprint. When the voiceprint of the audio data is the target voiceprint, it is determined that the audio data satisfies the wake-up condition; when the voiceprint of the audio data is not the target voiceprint, it is determined that the audio data does not satisfy the wake-up condition.

For another example, when the wake-up condition is an audio intensity of the audio data exceeding a preset intensity, based on the voice wake-up algorithm, the audio intensity of the audio data is identified. When the audio intensity exceeds the preset intensity, it is determined that the audio data satisfies the wake-up condition; when the audio intensity does not exceed the preset intensity, it is determined that the audio data does not satisfy the wake-up condition.

First core controller: a controller configured to run the first operating system; for example, the first core controller may be a first central processing unit (CPU) core.

Second core controller: a controller configured to run the second operating system; for example, the second core controller is a second CPU core.

Exemplarily, in other embodiments of the present disclosure, the electronic device may be set with a single processor, and the first operating system and the second operating system are run on different cores of the processor, respectively. Among them, the processing performance of the core running the first operating system is higher than the processing performance of the core running the second operating system.

Exemplarily, the performance of the first core controller is lower than that of the second core controller, or the power consumption of the first core controller is lower than that of the second core controller.

Exemplarily, in other embodiments of the present disclosure, the electronic device is set with a first processor and a second processor, where the processing performance of the first processor is higher than the processing performance of the second processor (the processing capability and processing speed of the first processor are higher than those of the second processor), and the power consumption of the first processor is higher than the power consumption of the second processor. Correspondingly, the running power consumption of the first operating system run by the first processor is higher than the running power consumption of the second operating system run by the second processor.

In some embodiments of the present disclosure, the first core controller can not only run the first operating system but also run the voice wake-up algorithm.

In the embodiments of the present disclosure, when the first operating system is in the active state and the second operating system is in the sleep state, the first core controller identifies whether the audio data satisfies the wake-up condition based on the voice wake-up algorithm. When the audio data satisfies the wake-up condition, the second operating system is awakened. After the second operating system is awakened, the second core controller performs subsequent voice recognition and interaction processes by a voice assistant.

Audio collection component: configured for recording, converting a sound signal into an electrical signal, and transmitting the electrical signal to the audio codec, such that the audio codec converts the electrical signal into the audio data. For example, the audio collection component may be a microphone (MIC).

In the embodiments of the present disclosure, the number of the audio collection component(s) may be 1 or 2. In a case where the number of the audio collection component is 1, when the first operating system is in the active state and the second operating system is in the sleep state, the audio collection component serves the first operating system, that is, the control authority of the audio collection component resides in the first operating system. After the second operating system is awakened, the audio collection component serves the second operating system, that is, the control authority of the audio collection component is transferred from the first operating system to the second operating system. When the number of the audio collection components is 2, one audio collection component serves the first operating system, and the other audio collection component serves the second operating system.

It can be understood that when the number of the audio collection component included in the electronic device is 1, the electronic device further includes a switching switch; a fixed end of the switching switch is electrically connected to an output end of the audio collection component, and a switching end of the switching switch is electrically connected to the audio codec or the second core controller.

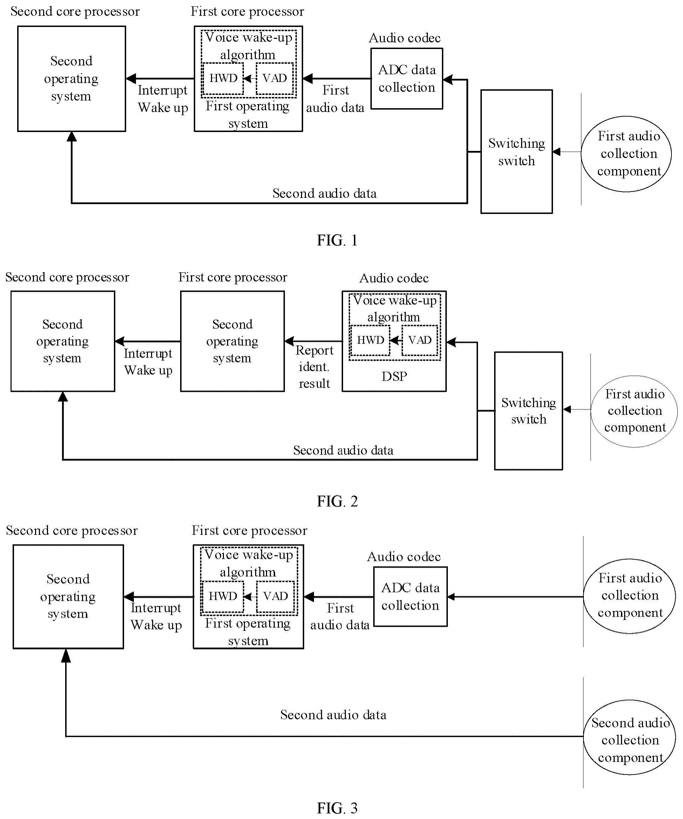

Referring to FIG. 1, FIG. 1 is a circuit diagram of an electronic device according to some embodiments of the present disclosure. In FIG. 1, a case where the voice wake-up algorithm is run on the first core controller and the number of the first audio collection component is 1 is taken as an example for description. In this case, the hardware circuit diagram includes a first audio collection component, a switching switch, an audio codec, a first core controller, and a second core controller. The first core controller is configured to run a first operating system and a voice wake-up algorithm, and the second core controller is configured to run a second operating system.

An output end of the first audio collection component is electrically connected to a fixed end of the switching switch. In a voice wake-up stage, a switching end of the first audio collection component is electrically connected to an input end of the audio codec, an output end of the audio codec is electrically connected to an output end of the first core controller, and the output end of the first core controller is electrically connected to an input end of the second core controller.

The first audio collection component is configured to collect a first sound signal and input the first sound signal to the audio codec. The audio codec is configured to convert the first sound signal into first audio data and input the first audio data to the first core controller. The first core controller is configured to identify whether the first audio data satisfies a wake-up condition based on the voice wake-up algorithm. When the first audio data satisfies the wake-up condition, the second operating system is awakened, and a switching end of the switching switch is switched from being electrically connected to the audio codec to being electrically connected to the second core controller. That is, in a voice recognition stage, the switching end of the first audio collection component is electrically connected to the second core controller, in which case the first audio collection component inputs a collected second sound signal to the second core controller. The second core controller is configured to convert the second sound signal into second audio data, recognize a voice control command corresponding to the second audio data, and respond to the voice control command.

The voice wake-up algorithm includes a Voice Activity Detection (VAD) algorithm and a Hotword Detection (HWD) algorithm. The VAD algorithm is configured to detect voice data and non-voice data from the audio data, and the HWD algorithm is configured to identify whether the voice data satisfies the wake-up condition.

Referring to FIG. 2, FIG. 2 is a circuit diagram of an electronic device according to other embodiments of the present disclosure. In FIG. 2, a case where the voice wake-up algorithm is run on the audio codec and the number of the first audio collection component is 1 is taken as an example for description. In this case, the hardware circuit diagram includes a first audio collection component, a switching switch, an audio codec, a first core controller, and a second core controller. The first core controller is configured to run a first operating system, the audio codec is configured to run a voice wake-up algorithm, and the second core controller is configured to run a second operating system.

An output end of the first audio collection component is electrically connected to a fixed end of the switching switch. In a voice wake-up stage, a switching end of the first audio collection component is electrically connected to an input end of the audio codec, an output end of the audio codec is electrically connected to an output end of the first core controller, and the output end of the first core controller is electrically connected to an input end of the second core controller.

The first audio collection component is configured to collect a first sound signal and input the first sound signal to the audio codec. The audio codec is configured to convert the first sound signal into first audio data, identify whether the first audio data satisfies a wake-up condition based on the voice wake-up algorithm, and report an identification result to the first core controller when the first audio data satisfies the wake-up condition, where the identification result is configured to indicate that the first audio data satisfies the wake-up condition. The first core controller is configured to send a wake-up request to the second core controller based on the identification result, where the wake-up request is configured to wake up the second operating system. After the second operating system is awakened, a switching end of the switching switch is switched from being electrically connected to the audio codec to being electrically connected to the second core controller. That is, in a voice recognition stage, the switching end of the first audio collection component is electrically connected to the second core controller, in which case the first audio collection component inputs a collected second sound signal to the second core controller. The second core controller is configured to convert the second sound signal into second audio data, recognize a voice control command corresponding to the second audio data, and respond to the voice control command.

Referring to FIG. 3, FIG. 3 is a circuit diagram of an electronic device according to further other embodiments of the present disclosure. In FIG. 3, a case where the voice wake-up algorithm is run on the first core controller and the number of the audio collection components is 2 is taken as an example for description. In this case, the hardware circuit diagram includes a first audio collection component, a second audio collection component, an audio codec, a first core controller, and a second core controller. The first core controller is configured to run a first operating system and a voice wake-up algorithm, and the second core controller is configured to run a second operating system.

It can be understood that an output end of the first audio collection component is electrically connected to an input end of the audio codec, an output end of the audio codec is electrically connected to an output end of the first core controller, and an output end of the first core controller is electrically connected to an input end of the second core controller. An output end of the second audio collection component is electrically connected to the second core controller.

The first audio collection component is configured to collect a first sound signal, and the second audio collection component is configured to collect a second sound signal. The processing processes of the audio codec, the first core controller, and the second core controller are the same as those of the audio codec, the first core controller, and the second core controller in FIG. 1, and details are not repeated here.

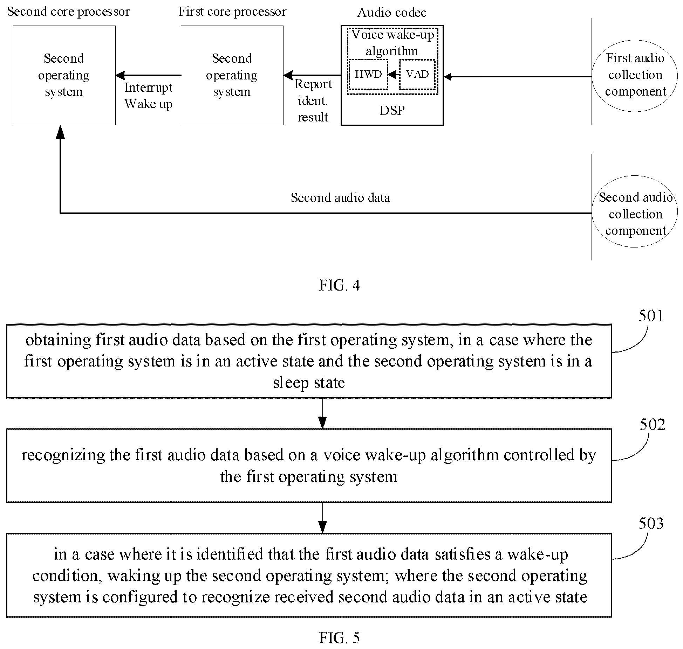

Referring to FIG. 4, FIG. 4 is a circuit diagram of an electronic device according to still other embodiments of the present disclosure. In FIG. 4, a case where the voice wake-up algorithm is run on the audio codec and the number of the audio collection components is 2 is taken as an example for description. In this case, the hardware circuit diagram includes a first audio collection component, a second audio collection component, an audio codec, a first core controller, and a second core controller. The first core controller is configured to run a first operating system, the audio codec is configured to run a voice wake-up algorithm, and the second core controller is configured to run a second operating system.

An output end of the first audio collection component is electrically connected to an input end of the audio codec, an output end of the audio codec is electrically connected to an output end of the first core controller, and an output end of the first core controller is electrically connected to an input end of the second core controller. An output end of the second audio collection component is electrically connected to the second core controller.

The first audio collection component is configured to collect a first sound signal, and the second audio collection component is configured to collect a second sound signal. The processing processes of the audio codec, the first core controller, and the second core controller are the same as those of the audio codec, the first core controller, and the second core controller in FIG. 2, and details are not repeated here.

Referring to FIG. 5, FIG. 5 is a flowchart of a voice wake-up method according to some embodiments of the present disclosure. The execution body of the method in the present embodiments is an electronic device. The electronic device includes a first core controller and a second core controller. The first core controller is configured to run a first operating system, the second core controller is configured to run a second operating system, and power consumption of the first core controller running the first operating system is lower than power consumption of the second core controller running the second operating system. Referring to FIG. 5, the method includes operations at blocks illustrated herein.

At block 501: obtaining first audio data based on the first operating system, in a case where the first operating system is in an active state and the second operating system is in a sleep state.

Since the power consumption of the first core controller running the first operating system is lower than the power consumption of the second core controller running the second operating system, in a voice wake-up stage, the first operating system being in the active state and the second operating system being in the sleep state may reduce the power consumption of the electronic device.

It can be understood that the second operating system being in the sleep state may be understood as that except that the system memory still has a small amount of power supply, the power supplies of most hardware in the system are turned off. The sleep state may be divided into multiple stages (such as S1 to S4), and the power-on and power-off states of the processor in different stages of the sleep state may be different, which is not limited in the embodiments of the present disclosure. For example, in the S1 stage, the processor remains in a power-on state (no computing tasks will be performed). In the S2 and above stages (S3 and S4 stages), the processor is in a power-off state.

In some embodiments of the present disclosure, when the first operating system is in the active state and the second operating system is in the sleep state, the first core controller obtains the first audio data in real time based on the first operating system.

At block 502: recognizing the first audio data based on a voice wake-up algorithm controlled by the first operating system.

After obtaining the first audio data, the first core controller recognizes the first audio data based on the voice wake-up algorithm controlled by the first operating system. The voice wake-up algorithm is configured to identify whether the first audio data satisfies a wake-up condition. When the first audio data satisfies the wake-up condition, operation 503 is executed; when the first audio data does not satisfy the wake-up condition, operation 501 is executed again until the first audio data satisfying the wake-up condition is obtained, and then operation 503 is executed.

Exemplarily, the voice wake-up algorithm may include a VAD algorithm and an HWD algorithm. The electronic device detects first voice data and first non-voice data from the first audio data based on the VAD algorithm, identifies whether the first voice data satisfies the wake-up condition based on the HWD algorithm, and discards the first non-voice data.

At block 503: in a case where it is identified that the first audio data satisfies a wake-up condition, waking up the second operating system; where the second operating system is configured to recognize received second audio data in an active state.

When it is identified that the first audio data satisfies the wake-up condition, the first core controller immediately wakes up the second operating system. Waking up the second operating system means that the second operating system is switched from the sleep state to the active state. In addition, after waking up the second operating system, the first operating system is switched from the active state to a sleep state or a background running state, that is, the first operating system is in the sleep state or the background running state, thereby further reducing the power consumption of the electronic device. It can be understood that the second operating system being in the active state may be understood as a state where the system is operating normally after booting, including all P and C states.

In the embodiments of the present disclosure, in the voice wake-up stage, the voice wake-up algorithm is controlled by the first operating system, such that the first operating system can be in the active state, and the second operating system can be in the sleep state. The second operating system is awakened only after the first audio data satisfying the wake-up condition is obtained, thereby reducing the consumption of the second operating system on the power of the electronic device. That is, the present disclosure may reduce the power consumption of the electronic device.

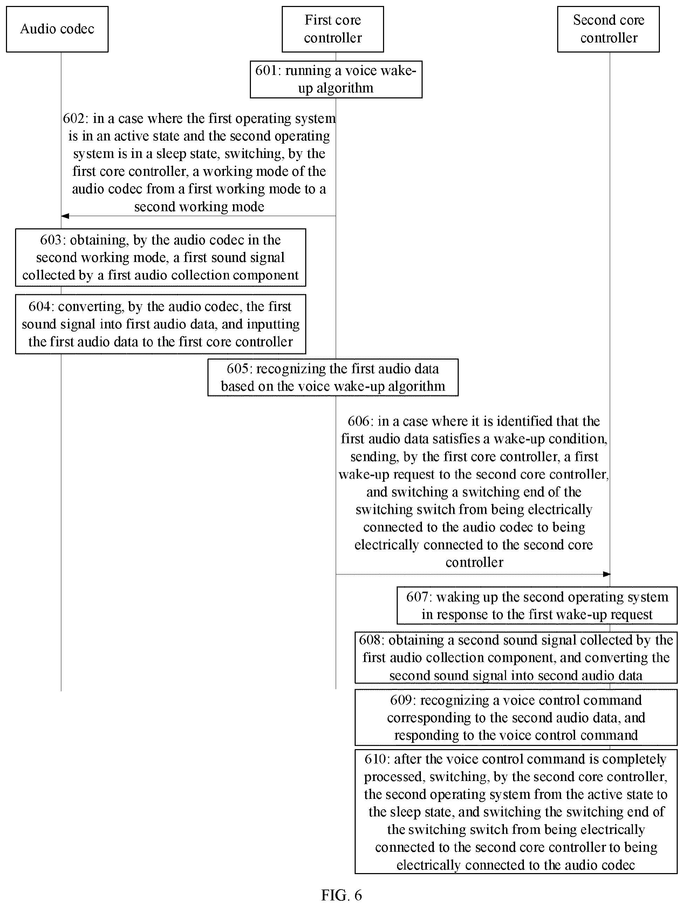

Referring to FIG. 6, FIG. 6 is a flowchart of a voice wake-up method according to other embodiments of the present disclosure. The execution body of the method in the present embodiments is an electronic device. The electronic device includes a first core controller and a second core controller. The first core controller is configured to run a first operating system, the second core controller is configured to run a second operating system, and power consumption of the first core controller running the first operating system is lower than power consumption of the second core controller running the second operating system. In the embodiments of the present disclosure, the circuit diagram of the electronic device shown in FIG. 1 is taken as an example for description. Referring to FIG. 6, the method includes operations at blocks illustrated herein.

At block 601: running, by the first core controller, a voice wake-up algorithm.

In some embodiments of the present disclosure, when the electronic device is in a booted state, the first core controller runs the voice wake-up algorithm, thereby ensuring that the voice wake-up operation can be performed in time. In other embodiments of the present disclosure, when the electronic device is in the booted state, the first core controller first determines whether a preset condition for running the voice wake-up algorithm is satisfied. When the preset condition for running the voice wake-up algorithm is satisfied, the voice wake-up algorithm is run; when the preset condition for running the voice wake-up algorithm is not satisfied, the voice wake-up algorithm is not run, thereby further reducing the power consumption of the electronic device.

In some embodiments of the present disclosure, the preset condition may include at least one of the following: a voice wake-up switch of the electronic device being in an on state; the control authority of the first audio collection component residing in the first core controller; a screen of the electronic device being in a lit state; no voice task with a priority higher than a voice wake-up task existing. Exemplarily, a case where the preset condition includes the above four items is taken as an example for description. Correspondingly, the step of the first core controller determining whether the preset condition for running the voice wake-up algorithm is satisfied may be as followed.

When the voice wake-up switch of the electronic device is in the on state, the control authority of the first audio collection component resides in the first core controller, the screen of the electronic device is in the lit state, and no voice task with a priority higher than the voice wake-up task exists, it is determined that the preset condition for running the voice wake-up algorithm is satisfied. That is, the first core controller runs the voice wake-up algorithm in this case. When the voice wake-up switch of the electronic device is in an off state, or the control authority of the first audio collection component does not reside in the first core controller (that is, the control authority of the first audio collection component resides in the second core controller), or the screen of the electronic device is in an off state, or a task with a priority higher than the voice wake-up task exists, it is determined that the preset condition for running the voice wake-up algorithm is not satisfied. The task with a priority higher than the voice wake-up task may be a voice call task or a video call task, etc.

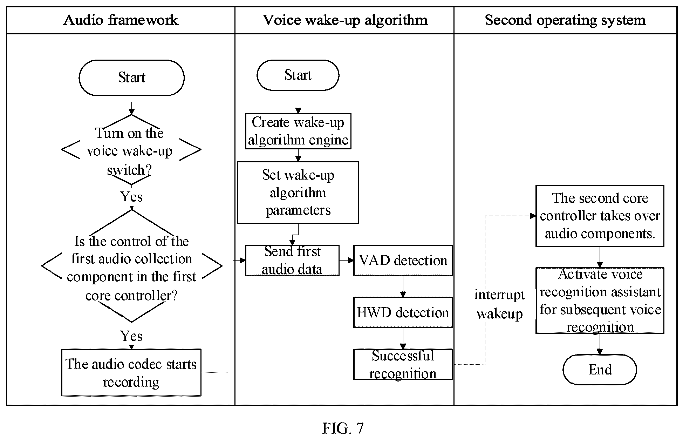

In some embodiments of the present disclosure, satisfying the preset condition for running the voice wake-up algorithm means that the voice wake-up switch is turned on; not satisfying the preset condition for running the voice wake-up algorithm means that the voice wake-up switch is not turned on. That is, referring to FIG. 7, the electronic device first determines whether the voice wake-up switch is turned on. When the voice wake-up switch is turned on, it is determined whether the control authority of the first audio collection component resides in the first core controller. When the control authority of the first audio collection component resides in the first core controller, the audio codec is started.

It can be understood that the running strategy of the voice wake-up algorithm may be adjusted according to the requirements of different products. In the embodiments of the present disclosure, the running strategy of the voice wake-up algorithm is not specifically limited.

It can be understood that when the first core controller runs the voice wake-up algorithm, the first operating system is in the active state. Since the second operating system is not needed at this time, the second operating system is set to the sleep state, thereby saving the power consumption of the electronic device.

It can be understood that the power consumption of the first core controller running the voice wake-up algorithm is lower than the power consumption of the second core controller running the voice wake-up algorithm. Therefore, the embodiments of the present disclosure may reduce power consumption.

At block 602: in a case where the first operating system is in an active state and the second operating system is in a sleep state, switching, by the first core controller, a working mode of the audio codec from a first working mode to a second working mode.

In some embodiments of the present disclosure, the power consumption of the audio codec in the second working mode is lower than the power consumption in the first working mode. The first working mode is a normal working mode, and the second working mode is a low-power analog-to-digital converter (ADC) mode. The first core controller switching the working mode of the audio codec from the first working mode to the second working mode may reduce the power required by the audio codec, that is, reduce the power consumption of the electronic device and thus improve the endurance capability of the electronic device.

In some embodiments of the present disclosure, before the first core controller runs the voice wake-up algorithm, no determination about whether the preset condition for running the voice wake-up algorithm is satisfied is made, and the determination is made before switching the working mode of the audio codec. Correspondingly, when the preset condition for running the voice wake-up algorithm is satisfied, the first core controller switches the working mode of the audio codec from the first working mode to the second working mode.

In some embodiments of the present disclosure, this operation is not a mandatory step. That is, when the first operating system is in the active state and the second operating system is in the sleep state, the audio codec may directly obtain the first sound signal collected by the first audio collection component.

At block 603: obtaining, by the audio codec in the second working mode, a first sound signal collected by a first audio collection component.

After the working mode of the audio codec is switched from the first working mode to the second working mode, the audio codec obtains, in a low-power mode, the first sound signal collected by the first audio collection component. A switching end of the first audio collection component is electrically connected to the audio codec. Therefore, the audio codec can obtain the first sound signal collected by the first audio collection component.

In some embodiments of the present disclosure, after the audio codec performs the mode switching, it immediately obtains the first sound signal collected by the first audio collection component.

At block 604: converting, by the audio codec, the first sound signal into first audio data, and inputting, by the audio codec, the first audio data to the first core controller.

The first audio data is pulse code modulation (PCM) audio data that can be recognized by the voice wake-up algorithm. In a possible implementation, the audio codec may transmit each frame of data of the first audio data to the first core controller after conversion, thereby improving the real-time performance of transmission. In another possible implementation, the audio codec periodically transmits the converted audio data to the first core controller. That is, the audio codec periodically inputs the converted first audio data to the first core controller, thereby reducing the power consumption of the electronic device.

In some embodiments of the present disclosure, the transmission of audio data between the audio codec and the first core controller may be through an Inter-IC Sound (I2S) bus.

In some embodiments of the present disclosure, before receiving the first audio data transmitted by the audio codec, the first core controller creates a voice wake-up algorithm engine and sets algorithm parameters of the voice wake-up algorithm engine, that is, performs a process of initializing the voice wake-up algorithm. For example, for this process, reference may be made to FIG. 7.

At block 605: recognizing, by the first core controller, the first audio data based on the voice wake-up algorithm.

The voice wake-up algorithm is configured to identify whether the first audio data satisfies a wake-up condition. When the first audio data satisfies the wake-up condition, operation 606 is executed; when the first audio data does not satisfy the wake-up condition, operation 603 is executed again until the first audio data satisfying the wake-up condition is obtained, and then operation 606 is executed.

The voice wake-up algorithm includes a VAD algorithm and an HWD algorithm. The first core controller detects first voice data and first non-voice data from the first audio data based on the VAD algorithm, identifies whether the first voice data satisfies the wake-up condition based on the HWD algorithm, and discards the first non-voice data. For example, for this process, reference may be made to FIG. 7.

In some embodiments of the present disclosure, when the first core controller identifies that the first audio data satisfies the wake-up condition, it may continue to run the voice wake-up algorithm, or stop running the voice wake-up algorithm and run the voice wake-up algorithm again when conditions for running the voice wake-up algorithm are satisfied. That is, the first core controller decides whether to continue running the voice wake-up algorithm according to its own strategy.

At block 606: in a case where it is identified that the first audio data satisfies a wake-up condition, sending, by the first core controller, a first wake-up request to the second core controller, and switching, by the first core controller, a switching end of the switching switch from being electrically connected to the audio codec to being electrically connected to the second core controller.

In some embodiments of the present disclosure, the first wake-up request is configured to request waking up the second operating system. The first core controller may send the first wake-up request to the second core controller in an interrupt wake-up manner. The first core controller switches the switching end of the switching switch from being electrically connected to the audio codec to being electrically connected to the second core controller, thereby transferring the controller of the first audio collection component from the audio codec to the second core controller, that is, the second core controller takes over the first audio collection component. In the embodiments of the present disclosure, the time-division multiplexing of the first audio collection component is realized through the switching switch, which may reduce components included in the circuit of the electronic device, reduce the space occupied by the circuit, that is, reduce the volume of the electronic device and improve the aesthetics of the electronic device.

In some embodiments of the present disclosure, after the first core controller sends the first wake-up request to the second core controller, that is, after waking up the second operating system, the first operating system is switched from the active state to a sleep state or a background running state, that is, the first operating system is in the sleep state or the background running state, thereby further reducing the power consumption of the electronic device and improving the endurance capability of the electronic device. In addition, the first core controller may turn off the audio codec or set the audio codec to a sleep state, that is, the audio codec is in an off state or a sleep state, thereby further reducing the power consumption of the electronic device and improving the endurance capability of the electronic device.

At block 607: waking up, by the second core controller, the second operating system in response to the first wake-up request.

After identifying that the first audio data satisfies the wake-up condition, the first core controller may quickly wake up the second operating system, that is, wake up the second core controller, and then let the second core controller perform subsequent voice recognition. That is, after the second core controller wakes up the second operating system, it activates a voice recognition assistant of the electronic device. The voice recognition assistant is configured to recognize a voice control command corresponding to audio data.

At block 608: obtaining, by the second core controller, a second sound signal collected by the first audio collection component, and converting, by the second core controller, the second sound signal into second audio data.

The controller of the first audio collection component has been switched from the audio codec to the second core controller. Therefore, the second core controller can obtain the second sound signal collected by the first audio collection component.

At block 609: recognizing, by the second core controller, a voice control command corresponding to the second audio data, and responding, by the second core controller, to the voice control command.

The second core controller recognizes the voice control command corresponding to the second audio data through the voice recognition assistant and then responds to the voice control command. It can be understood that responding to the voice control command means processing the voice control command. For example, when the voice control command is "open xxx application", responding to the voice control command means executing an operation of opening the xxx application. The operation 610 is executed only after the processing of the voice control command is completed, that is, after it is determined that a certain application has been opened, the processing of the voice control command is considered to be completed.

In the embodiments of the present disclosure, after the second core controller responds to the voice control command, it may directly end, or execute operation 610 to switch the mode and hand over the control authority of the first audio collection component.

At block 610: after the voice control command is completely processed, switching, by the second core controller, the second operating system from the active state to the sleep state, and switching, by the second core controller, the switching end of the switching switch from being electrically connected to the second core controller to being electrically connected to the audio codec.

The second core controller switching the second operating system from the active state to the sleep state may reduce the power consumption of the electronic device. In addition, the second core controller switches the switching end of the switching switch from being electrically connected to the second core controller to being electrically connected to the audio codec, thereby switching the task back to the voice wake-up stage again. In addition, in operation 606, after the first core controller sends the first wake-up request to the second core controller, that is, after waking up the second operating system and the first operating system is switched from the active state to the sleep state: after the processing of the voice control command is completed, the first operating system is switched from the sleep state to the active state; or, after the processing of the voice control command is completed, the first operating system is switched from the background running state to a foreground running state. In some embodiments of the present disclosure, after operation 610 is executed, the procedure may end or operation 602 may be executed.

In the embodiments of the present disclosure, in the voice wake-up stage, the voice wake-up algorithm is controlled by the first operating system, such that the first operating system can be in the active state, and the second operating system may be in the sleep state. The second operating system is awakened only after the first audio data satisfying the wake-up condition is obtained, thereby reducing the consumption of the second operating system on the power of the electronic device, that is, the present disclosure may reduce the power consumption of the electronic device. Moreover, due to the reduced power consumption of the electronic device, excellent power consumption performance makes it possible to always run the voice wake-up algorithm on dual-system electronic devices, improving user experience.

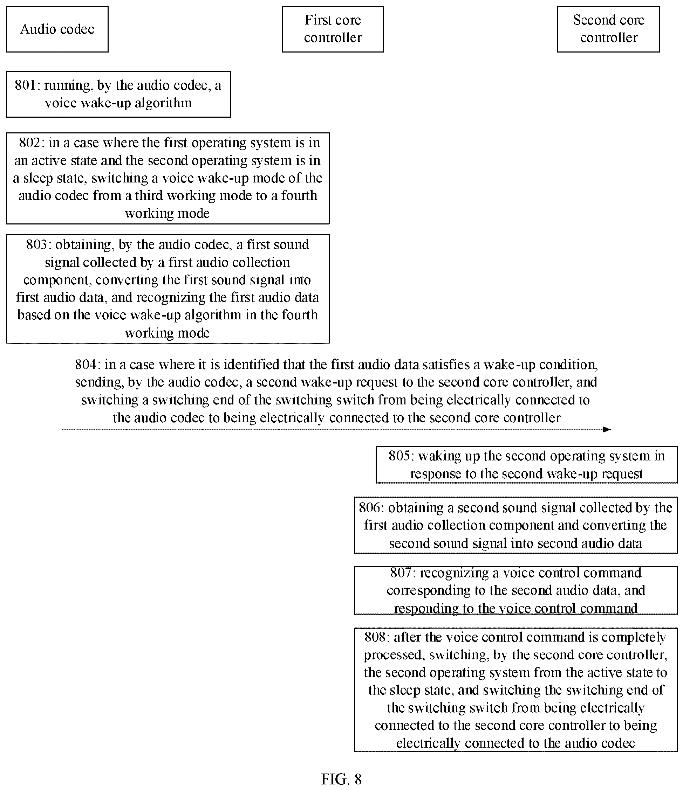

Referring to FIG. 8, FIG. 8 is a flowchart of a voice wake-up method according to further other embodiments of the present disclosure. The execution body of the method in the present embodiments is an electronic device. The electronic device includes a first core controller and a second core controller. The first core controller is configured to run a first operating system, the second core controller is configured to run a second operating system, and power consumption of the first core controller running the first operating system is lower than power consumption of the second core controller running the second operating system. In the embodiments of the present disclosure, the circuit diagram of the electronic device shown in FIG. 2 is taken as an example for description. Referring to FIG. 8, the method includes operations at blocks illustrated herein.

At block 801: running, by the audio codec, a voice wake-up algorithm.

In some embodiments of the present disclosure, this operation is the same as operation 601, and details are not repeated here.

In some embodiments of the present disclosure, the audio codec is required to have a capability to independently run the voice wake-up algorithm to run the voice wake-up algorithm on the audio codec.

At block 802: in a case where the first operating system is in an active state and the second operating system is in a sleep state, switching a voice wake-up mode of the audio codec from a third working mode to a fourth working mode.

The power consumption of the audio codec recognizing audio data based on the voice wake-up algorithm in the fourth working mode is lower than that in the third working mode. The third working mode refers to a normal voice wake-up algorithm mode, and the fourth working mode refers to a low-power voice wake-up algorithm mode. The audio codec switching the voice wake-up mode from the third working mode to the fourth working mode may reduce the power required by the audio codec, that is, reduce the power consumption of the electronic device and thus improve the endurance capability of the electronic device.

The audio codec may perform the mode switching autonomously, or the first core controller instructs the audio codec to perform the mode switching. In a case where the first core controller instructs the audio codec to perform the mode switching, this operation may specifically be: when the first operating system is in the active state and the second operating system is in the sleep state, the first core controller sends a switching request to the audio codec, where the switching request is configured to request switching the voice wake-up mode of the audio codec from the third working mode to the fourth working mode; the audio codec, in response to the switching request, switches the voice wake-up mode from the third working mode to the fourth working mode.

In some embodiments of the present disclosure, this operation is not a mandatory step. That is, when the first operating system is in the active state and the second operating system is in the sleep state, the audio codec may directly recognize the first audio data based on the voice wake-up algorithm.

At block 803: obtaining, by the audio codec, a first sound signal collected by a first audio collection component, converting, by the audio codec, the first sound signal into first audio data, and recognizing, by the audio codec, the first audio data based on the voice wake-up algorithm in the fourth working mode.

In some embodiments of the present disclosure, the process of the audio codec obtaining the first sound signal collected by the first audio collection component and converting the first sound signal into the first audio data is similar to the process in operation 603 where the audio codec obtains the first sound signal collected by the first audio collection component in the second working mode, and operation 604 where the audio codec converts the first sound signal into the first audio data, and therefore details are not repeated herein. The process of the audio codec recognizing the first audio data based on the voice wake-up algorithm in the fourth working mode is similar to operation 605, and details are not repeated herein.

At block 804: in a case where it is identified that the first audio data satisfies a wake-up condition, sending, by the audio codec, a second wake-up request to the second core controller, and switching, by the audio codec, a switching end of the switching switch from being electrically connected to the audio codec to being electrically connected to the second core controller.

The second wake-up request is configured to request waking up the second operating system. In a possible implementation, the audio codec directly sends the second wake-up request to the second core controller to request waking up the second operating system. In another possible implementation, the audio codec sends the second wake-up request to the second core controller through the first core controller. For example, the audio codec reports an identification result to the first core controller. When the identification result indicates that the first audio data satisfies the wake-up condition, the first core controller sends the second wake-up request to the second core controller to request waking up the second operating system. The first core controller may send the second wake-up request to the second core controller in an interrupt wake-up manner. Moreover, the way the audio codec wakes up the second operating system is determined by the hardware circuit of the electronic device.

In the embodiments of the present disclosure, in addition to collecting audio data through ADC, the audio codec directly runs the voice wake-up algorithm on its own DSP, thereby saving the process of transmitting audio data and improving the efficiency of voice wake-up.

At block 805: waking up, by the second core controller, the second operating system in response to the second wake-up request.

In some embodiments of the present disclosure, this operation is the same as operation 607, and details are not repeated here.

At block 806: obtaining, by the second core controller, a second sound signal collected by the first audio collection component and converting, by the second core controller, the second sound signal into second audio data.

In some embodiments of the present disclosure, this operation is the same as operation 608, and details are not repeated here.

At block 807: recognizing, by the second core controller, a voice control command corresponding to the second audio data, and responding, by the second core controller, to the voice control command.

In some embodiments of the present disclosure, this operation is the same as operation 609, and details are not repeated here.

At block 808: after the voice control command is completely processed, switching, by the second core controller, the second operating system from the active state to the sleep state, and switching, by the second core controller, the switching end of the switching switch from being electrically connected to the second core controller to being electrically connected to the audio codec.

In some embodiments of the present disclosure, this operation is the same as operation 610, and details are not repeated here.

In the embodiments of the present disclosure, in the voice wake-up stage, the voice wake-up algorithm is controlled by the first operating system, such that the first operating system can be in the active state, and the second operating system can be in the sleep state. The second operating system is awakened only after the first audio data satisfying the wake-up condition is obtained, thereby reducing the consumption of the second operating system on the power of the electronic device, that is, the present disclosure may reduce the power consumption of the electronic device. Moreover, due to the reduced power consumption of the electronic device, excellent power consumption performance makes it possible to always run the voice wake-up algorithm on dual-system electronic devices, improving user experience.

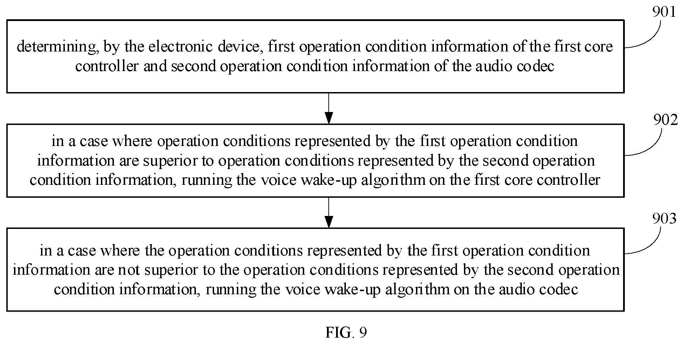

In some embodiments of the present disclosure, operations 601-610 take the case where the voice wake-up algorithm is run on the first core controller as an example for description; operations 801-808 take the case where the voice wake-up algorithm is run on the audio codec as an example for description. In the embodiments of the present disclosure, it is possible to determine on which device to run the voice wake-up algorithm based on the operation conditions of the first core controller and the audio codec. Referring to FIG. 9, the process includes operations at blocks illustrated herein.

At block 901: determining, by the electronic device, first operation condition information of the first core controller and second operation condition information of the audio codec.

The first operation condition information is configured to represent conditions for the first core controller to run the voice wake-up algorithm, and the second operation condition information is configured to represent conditions for the audio codec to run the voice wake-up algorithm. For example, the first operation condition information includes at least one of: first remaining code space, first remaining running memory space, first remaining available computing power, and first power consumption when running the voice wake-up algorithm of the first core controller; the second operation condition information includes at least one of: second remaining code space, second remaining running memory space, second remaining available computing power, and second power consumption when running the voice wake-up algorithm of the audio codec.

In some embodiments of the present disclosure, the first operation condition information includes the first remaining code space, and the second operation condition information includes the second remaining code space. When the first remaining code space is larger than the second remaining code space, it is determined that the operation conditions represented by the first operation condition information are superior to the operation conditions represented by the second operation condition information, and operation 902 is executed; when the first remaining code space is not larger than the second remaining code space, it is determined that the operation conditions represented by the first operation condition information are not superior to the operation conditions represented by the second operation condition information, and operation 903 is executed.

In other embodiments of the present disclosure, the first operation condition information includes the first remaining running memory space, and the second operation condition information includes the second remaining running memory space. When the first remaining running memory space is larger than the second remaining running memory space, it is determined that the operation conditions represented by the first operation condition information are superior to the operation conditions represented by the second operation condition information, and operation 902 is executed; when the first remaining running memory space is not larger than the second remaining running memory space, it is determined that the operation conditions represented by the first operation condition information are not superior to the operation conditions represented by the second operation condition information, and operation 903 is executed.

In further other embodiments of the present disclosure, the first operation condition information includes the first remaining available computing power, and the second operation condition information includes the second remaining available computing power. When the first remaining available computing power is more than the second remaining available computing power, it is determined that the operation conditions represented by the first operation condition information are superior to the operation conditions represented by the second operation condition information, and operation 902 is executed; when the first remaining available computing power is not more than the second remaining available computing power, it is determined that the operation conditions represented by the first operation condition information are not superior to the operation conditions represented by the second operation condition information, and operation 903 is executed.

In still other embodiments of the present disclosure, the first operation condition information includes the first power consumption when running the voice wake-up algorithm, and the second operation condition information includes the second power consumption when running the voice wake-up algorithm. When the first power consumption is less than the second power consumption, it is determined that the operation conditions represented by the first operation condition information are superior to the operation conditions represented by the second operation condition information, and operation 902 is executed; when the first power consumption is not less than the second power consumption, it is determined that the operation conditions represented by the first operation condition information are not superior to the operation conditions represented by the second operation condition information, and operation 903 is executed.

In still other embodiments of the present disclosure, when the first operation condition information includes more than one of the first remaining code space, the first remaining running memory space, the first remaining available computing power, and the first power consumption when running the voice wake-up algorithm of the first core controller; and the second operation condition information includes more than one of the second remaining code space, the second remaining running memory space, the second remaining available computing power, and the second power consumption when running the voice wake-up algorithm of the audio codec, the electronic device determines a first advantage parameter value for running the voice wake-up algorithm on the first core controller and a second advantage parameter value for running the voice wake-up algorithm on the audio codec based on the first operation condition information and the second operation condition information. When the first advantage parameter value is greater than the second advantage parameter value, it is determined that the operation conditions represented by the first operation condition information are superior to the operation conditions represented by the second operation condition information, and operation 902 is executed; when the first advantage parameter value is not greater than the second advantage parameter value, it is determined that the operation conditions represented by the first operation condition information are not superior to the operation conditions represented by the second operation condition information, and operation 903 is executed.

First implementation: The operation of the electronic device determining the first advantage parameter value for running the voice wake-up algorithm on the first core controller and the second advantage parameter value for running the voice wake-up algorithm on the audio codec based on the first operation condition information and the second operation condition information may be as followed.

The electronic device determines weights corresponding to multiple parameter items, performs weighted summation on each parameter value included in the first operation condition information based on the weight corresponding to each parameter item to obtain the first advantage parameter value, and performs weighted summation on each parameter value included in the second operation condition information based on the weight corresponding to each parameter item to obtain the second advantage parameter value.

Exemplarily, the first operation condition information includes the first remaining code space and the first remaining running memory space; the second operation condition information includes the second remaining code space and the second remaining running memory space. The electronic device determines a first weight corresponding to the remaining code space and a second weight corresponding to the remaining running memory space, performs weighted summation on the first remaining code space and the first remaining running memory space based on the first weight and the second weight to obtain the first advantage parameter value; and performs weighted summation on the second remaining code space and the second remaining running memory space based on the first weight and the second weight to obtain the second advantage parameter value.

Second implementation: The operation of the electronic device determining the first advantage parameter value for running the voice wake-up algorithm on the first core controller and the second advantage parameter value for running the voice wake-up algorithm on the audio codec based on the first operation condition information and the second operation condition information may be as followed.

The electronic device determines weights corresponding to multiple parameter items; based on each parameter value included in the first operation condition information and each parameter value included in the second operation condition information, determines an advantage parameter sub-value corresponding to each parameter item; for the first operation condition information, performs weighted summation on the advantage parameter sub-value corresponding to each parameter item included in the first operation condition information based on the weight corresponding to each parameter item to obtain the first advantage parameter value; for the second operation condition information, performs weighted summation on the advantage parameter sub-value corresponding to each parameter value included in the second operation condition information based on the weight corresponding to each parameter item to obtain the second advantage parameter value.

Exemplarily, the first operation condition information includes the first remaining code space and the first remaining running memory space; the second operation condition information includes the second remaining code space and the second remaining running memory space. The electronic device determines a first weight corresponding to the remaining code space and a second weight corresponding to the remaining running memory space. The first remaining code space is larger than the second remaining code space, then the advantage parameter sub-value corresponding to the first remaining code space included in the first operation condition information is 1, and the advantage parameter sub-value corresponding to the second remaining code space included in the second operation condition is 0; the first remaining running memory space included in the first operation condition information is not larger than the second remaining running memory space, then the advantage parameter sub-value corresponding to the first remaining running memory space included in the first operation condition information is 0, and the advantage parameter sub-value corresponding to the second remaining running memory space included in the first operation condition information is 1. Based on the first weight and the second weight, weighted summation is performed on the advantage parameter sub-value corresponding to the first remaining code space and the advantage parameter sub-value corresponding to the first remaining running memory space to obtain the first advantage parameter value; based on the first weight and the second weight, weighted summation is performed on the advantage parameter sub-value corresponding to the second remaining code space and the advantage parameter sub-value corresponding to the second remaining running memory space to obtain the second advantage parameter value.

At block 902: in a case where operation conditions represented by the first operation condition information are superior to operation conditions represented by the second operation condition information, running the voice wake-up algorithm on the first core controller.

In some embodiments of the present disclosure, after the electronic device determines to run the voice wake-up algorithm in the first core controller, it may perform the voice wake-up operation according to operations 601-610.

At block 903: in a case where the operation conditions represented by the first operation condition information are not superior to the operation conditions represented by the second operation condition information, running the voice wake-up algorithm on the audio codec.

In some embodiments of the present disclosure, after the electronic device determines to run the voice wake-up algorithm on the audio codec, it may perform the voice wake-up operation according to operations 801-808.

In the embodiments of the present disclosure, the voice wake-up algorithm needs to occupy a certain amount of code space, running memory space, and power consumption requirements, and has certain computing power requirements. Therefore, the electronic device decides which device to run the voice wake-up algorithm in based on the remaining code space, remaining memory space, available computing power, and power consumption when running the voice wake-up algorithm of the two components, the first core controller and the audio codec, which may determine a suitable device to run the voice wake-up algorithm, thereby improving the efficiency of running the voice wake-up algorithm and further improving the voice wake-up efficiency.

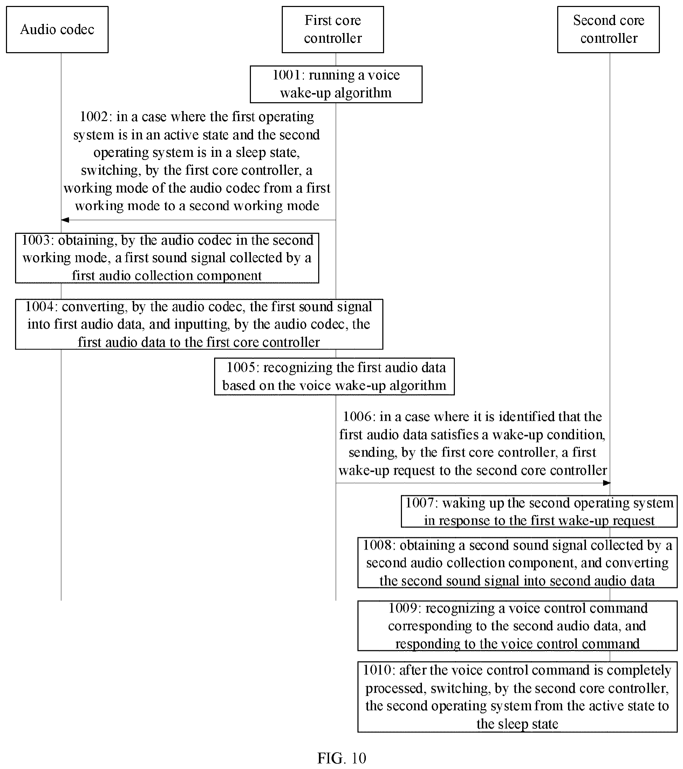

Referring to FIG. 10, FIG. 10 is a flowchart of a voice wake-up method according to still other embodiments of the present disclosure. The execution body of the method in the present embodiments is an electronic device. The electronic device includes a first core controller and a second core controller. The first core controller is configured to run a first operating system, the second core controller is configured to run a second operating system, and power consumption of the first core controller running the first operating system is lower than power consumption of the second core controller running the second operating system. In the embodiments of the present disclosure, the circuit diagram of the electronic device shown in FIG. 3 is taken as an example for description. Referring to FIG. 10, the method includes operations at blocks illustrated herein.

At block 1001: running, by the first core controller, a voice wake-up algorithm.

In some embodiments of the present disclosure, this operation is the same as operation 601, and details are not repeated here.

At block 1002: in a case where the first operating system is in an active state and the second operating system is in a sleep state, switching, by the first core controller, a working mode of the audio codec from a first working mode to a second working mode.

In some embodiments of the present disclosure, this operation is the same as operation 602, and details are not repeated here.

At block 1003: obtaining, by the audio codec in the second working mode, a first sound signal collected by a first audio collection component.

In some embodiments of the present disclosure, this operation is the same as operation 603, and details are not repeated here.

At block 1004: converting, by the audio codec, the first sound signal into first audio data, and inputting, by the audio codec, the first audio data to the first core controller.

In some embodiments of the present disclosure, this operation is the same as operation 604, and details are not repeated here.

At block 1005: recognizing, by the first core controller, the first audio data based on the voice wake-up algorithm.

In some embodiments of the present disclosure, this operation is the same as operation 605, and details are not repeated here.

At block 1006: in a case where it is identified that the first audio data satisfies a wake-up condition, sending, by the first core controller, a first wake-up request to the second core controller.

In some embodiments of the present disclosure, when it is identified that the first audio data satisfies the wake-up condition, the first core controller directly sends the first wake-up request to the second core controller to request waking up the second operating system. Since there are two audio collection components in the present embodiments, it is not necessary to switch the switching switch herein.

At block 1007: waking up, by the second core controller, the second operating system in response to the first wake-up request.

In some embodiments of the present disclosure, this operation is the same as operation 607, and details are not repeated here.

At block 1008: obtaining, by the second core controller, a second sound signal collected by a second audio collection component, and converting, by the second core controller, the second sound signal into second audio data.

In some embodiments of the present disclosure, this operation is the same as operation 608, and details are not repeated here.

At block 1009: recognizing, by the second core controller, a voice control command corresponding to the second audio data, and responding, by the second core controller, to the voice control command.

In some embodiments of the present disclosure, this operation is the same as operation 609, and details are not repeated here.

At block 1010: after the voice control command is completely processed, switching, by the second core controller, the second operating system from the active state to the sleep state.

In some embodiments of the present disclosure, the process of the second core controller switching the second operating system from the active state to the sleep state is the same as that in operation 610, and details are not repeated here. In addition, since there are two audio collection components in the present embodiments, it is not necessary to switch the switching switch herein.

In the embodiments of the present disclosure, in the voice wake-up stage, the voice wake-up algorithm is controlled by the first operating system, such that the first operating system can be in the active state, and the second operating system can be in the sleep state. The second operating system is awakened only after the first audio data satisfying the wake-up condition is obtained, thereby reducing the consumption of the second operating system on the power of the electronic device, that is, the present disclosure may reduce the power consumption of the electronic device. Moreover, due to the reduced power consumption of the electronic device, excellent power consumption performance makes it possible to always run the voice wake-up algorithm on dual-system electronic devices, improving user experience.

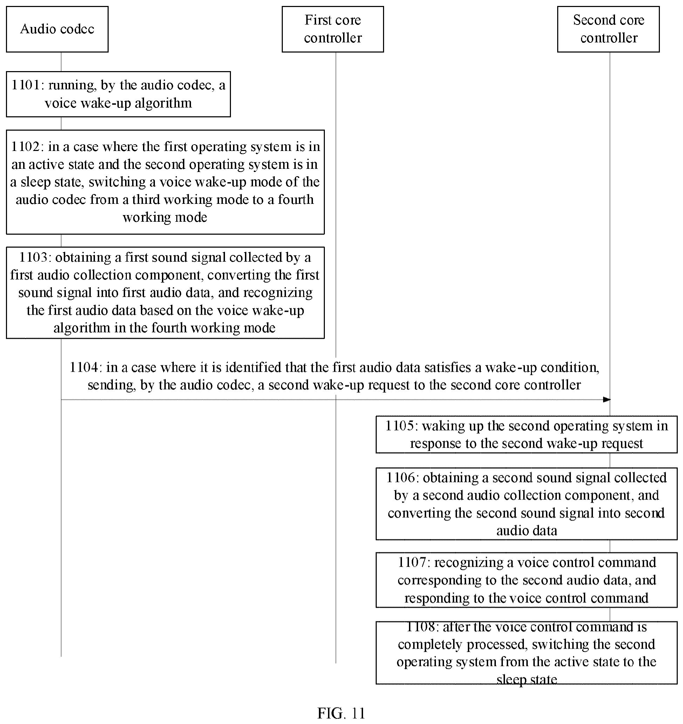

Referring to FIG. 11, FIG. 11 is a flowchart of a voice wake-up method according to still other embodiments of the present disclosure. The execution body of the method in the present embodiments is an electronic device. The electronic device includes a first core controller and a second core controller. The first core controller is configured to run a first operating system, the second core controller is configured to run a second operating system, and power consumption of the first core controller running the first operating system is lower than power consumption of the second core controller running the second operating system. In the embodiments of the present disclosure, the circuit diagram of the electronic device shown in FIG. 4 is taken as an example for description. Referring to FIG. 11, the method includes operations at blocks illustrated herein.

At block 1101: running, by the audio codec, a voice wake-up algorithm.

In some embodiments of the present disclosure, this operation is the same as operation 801, and details are not repeated here.

At block 1102: in a case where the first operating system is in an active state and the second operating system is in a sleep state, switching a voice wake-up mode of the audio codec from a third working mode to a fourth working mode.

In some embodiments of the present disclosure, this operation is the same as operation 802, and details are not repeated here.

At block 1103: obtaining, by the audio codec, a first sound signal collected by a first audio collection component, converting, by the audio codec, the first sound signal into first audio data, and recognizing, by the audio codec, the first audio data based on the voice wake-up algorithm in the fourth working mode.

In some embodiments of the present disclosure, this operation is the same as operation 803, and details are not repeated here.

At block 1104: in a case where it is identified that the first audio data satisfies a wake-up condition, sending, by the audio codec, a second wake-up request to the second core controller.

In some embodiments of the present disclosure, the process of the audio codec sending the second wake-up request to the second core controller is the same as that in operation 804, and details are not repeated here. In addition, since there are two audio collection components in the present embodiments, it is not necessary to switch the switching switch herein.

At block 1105: waking up, by the second core controller, the second operating system in response to the second wake-up request.

In some embodiments of the present disclosure, this operation is the same as operation 805, and details are not repeated here.

At block 1106: obtaining, by the second core controller, a second sound signal collected by a second audio collection component, and converting, by the second core controller, the second sound signal into second audio data.

In some embodiments of the present disclosure, this operation is the same as operation 806, and details are not repeated here.

At block 1107: recognizing, by the second core controller, a voice control command corresponding to the second audio data, and responding, by the second core controller, to the voice control command.

In some embodiments of the present disclosure, this operation is the same as operation 807, and details are not repeated here.

At block 1108: after the voice control command is completely processed, switching, by the second core controller, the second operating system from the active state to the sleep state.

In some embodiments of the present disclosure, the process of the second core controller switching the second operating system from the active state to the sleep state is the same as that in operation 808, and details are not repeated here. In addition, since there are two audio collection components in the present embodiments, it is not necessary to switch the switching switch herein.

In the embodiments of the present disclosure, in the voice wake-up stage, the voice wake-up algorithm is controlled by the first operating system, such that the first operating system can be in the active state, and the second operating system can be in the sleep state. The second operating system is awakened only after the first audio data satisfying the wake-up condition is obtained, thereby reducing the consumption of the second operating system on the power of the electronic device, that is, the present disclosure may reduce the power consumption of the electronic device. Moreover, due to the reduced power consumption of the electronic device, excellent power consumption performance makes it possible to always run the voice wake-up algorithm on dual-system electronic devices, improving user experience.

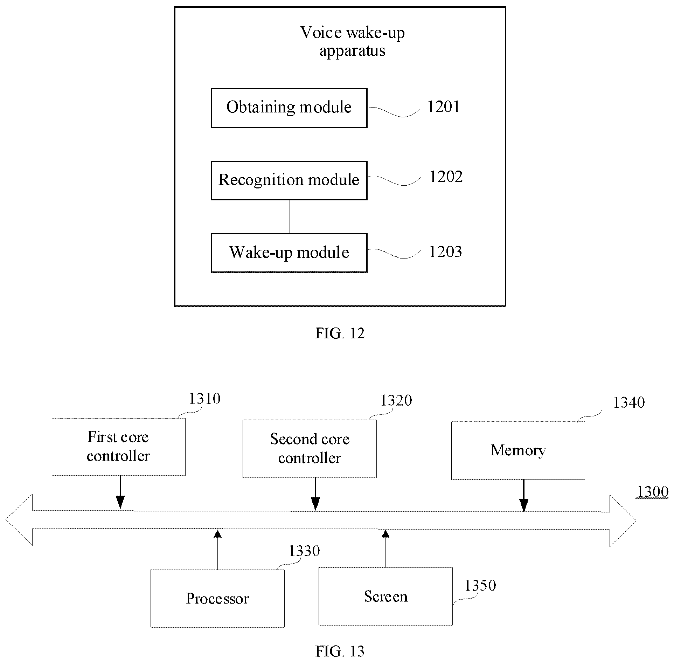

Referring to FIG. 12, FIG. 12 is a block diagram of a voice wake-up apparatus according to some embodiments of the present disclosure. The apparatus is deployed in an electronic device, and the electronic device includes a first core controller and a second core controller. The first core controller is configured to run a first operating system, and the second core controller is configured to run a second operating system. The apparatus includes:
an obtaining module 1201, configured to obtain first audio data based on the first operating system, in a case where the first operating system is in an active state and the second operating system is in a sleep state;
a recognition module 1202, configured to recognize the first audio data based on a voice wake-up algorithm controlled by the first operating system; and
a wake-up module 1203, configured to wake up the second operating system in a case where it is identified that the first audio data satisfies a wake-up condition; where the second operating system is configured to, in an active state, respond to a voice control command corresponding to second audio data.

In some embodiments, the apparatus further includes:
a first running module, configured to run the voice wake-up algorithm on the first core controller; or,
the electronic device further includes an audio codec electrically connected to the first core controller; and a second running module, configured to run the voice wake-up algorithm on the audio codec.

In some embodiments, the first core controller is configured to run the voice wake-up algorithm; the electronic device further includes an audio codec and a first audio collection component, an output end of the first audio collection component is electrically connected to an input end of the audio codec, and an output end of the audio codec is electrically connected to an input end of the first core controller;
the obtaining module 1201 is configured to obtain a first sound signal collected by the first audio collection component through the audio codec, convert the first sound signal into the first audio data, and input the first audio data to the first core controller.

In some embodiments, the obtaining module 1201 is configured to switch a working mode of the audio codec from a first working mode to a second working mode in a case where a preset condition for running the voice wake-up algorithm is satisfied; and control the audio codec to obtain the first sound signal collected by the first audio collection component in the second working mode;
where power consumption of the audio codec in the second working mode is lower than power consumption of the audio codec in the first working mode.

In some embodiments, the first core controller is configured to determine whether the preset condition for running the voice wake-up algorithm is satisfied, and the preset condition includes at least one of the following:
a voice wake-up switch of the electronic device being in an on state;
the control authority of the first audio collection component residing in the first core controller;
a screen of the electronic device being in a lit state; and
no voice task with a priority higher than a voice wake-up task existing.

In some embodiments, the audio codec is in an off state or a sleep state.

In some embodiments, the electronic device further includes a switching switch, a fixed end of the switching switch is electrically connected to the output end of the first audio collection component, and a switching end of the switching switch is configured to be electrically connected to the second core controller or the audio codec, and the second core controller is configured to run the second operating system;
the apparatus further includes:
a control module, configured to control the switching end of the switching switch to switch from being electrically connected to the audio codec to being electrically connected to the second core controller; and
a first processing module, configured to, based on the second operating system run on the second core controller, receive a second sound signal collected by the first audio collection component, convert the second sound signal into the second audio data, recognize a voice control command corresponding to the second audio data, and respond to the voice control command.

In some embodiments, the electronic device further includes a second audio collection component, and the second core controller is electrically connected to an output end of the second audio collection component, and the second operating system is run on the second core controller;
the apparatus further includes:
a second processing module, configured to, based on the second operating system run on the second core controller, receive a second sound signal collected by the second audio collection component, convert the second sound signal into the second audio data, recognize a voice control command corresponding to the second audio data, and respond to the voice control command.

In some embodiments, the audio codec is configured to run the voice wake-up algorithm;
the wake-up module 1203 is configured to send a wake-up request to the second core controller through the audio codec, the wake-up request being configured to request waking up the second operating system run on the second core controller; or,
the wake-up module 1203 is configured to send a wake-up request to the first core controller through the audio codec, and forward the wake-up request to the second core controller by the first core controller, the wake-up request being configured to request waking up the second operating system run on the second core controller.

In some embodiments, the apparatus further includes:
a determination module, configured to determine first operation condition information of the first core controller and second operation condition information of the audio codec, the first operation condition information being configured to represent conditions for the first core controller to run the voice wake-up algorithm, and the second operation condition information being configured to represent conditions for the audio codec to run the voice wake-up algorithm;
a first running module, configured to, in a case where the operation conditions represented by the first operation condition information are superior to the operation conditions represented by the second operation condition information, run the voice wake-up algorithm on the first core controller; and
a second running module, configured to, in a case where the operation conditions represented by the first operation condition information are not superior to the operation conditions represented by the second operation condition information, run the voice wake-up algorithm on the audio codec.

In some embodiments, the apparatus further includes:
a first switching module, configured to, after waking up the second operating system, switch the first operating system from the active state to a sleep state or a background running state.

In some embodiments, the apparatus further includes:
a second switching module, configured to, after the voice control command is completely processed, switch the first operating system from the sleep state to the active state, and switch the second operating system from the active state to the sleep state; or,
a second switching module, configured to, after the voice control command is completely processed, switch the first operating system from the background running state to a foreground running state, and switch the second operating system from the active state to the sleep state.

In the embodiments of the present disclosure, in the voice wake-up stage, the voice wake-up algorithm is controlled by the first operating system, such that the first operating system can be in the active state, and the second operating system can be in the sleep state. The second operating system is awakened only after the first audio data satisfying the wake-up condition is obtained, thereby reducing the consumption of the second operating system on the power of the electronic device, that is, the present disclosure may reduce the power consumption of the electronic device.

In some embodiments, when the voice wake-up apparatus provided in the above embodiments performs voice wake-up, the above division of functional modules is only provided as an example for description. In practical applications, the above functions may be assigned to be completed by different functional modules according to needs. That is, the internal structure of the electronic device is divided into different functional modules to complete all or part of the functions described above. In addition, the voice wake-up apparatus provided in the above embodiments and the voice wake-up method embodiments belong to the same concept. For the specific implementation process, reference may be made to the method embodiments. Details are not repeated here.

Referring to FIG. 13, FIG. 13 is a block diagram of an electronic device according to some embodiments of the present disclosure. The electronic device 1300 may be a smartphone, a smart home device, or a smart wearable device. The electronic device 1300 includes a first core controller 1310 and a second core controller 1320. The first core controller 1310 is configured to run a first operating system, and the second core controller 1320 is configured to run a second operating system. The electronic device 1300 of the present disclosure may further include one or more of the following components: a processor 1330, a memory 1340, and a screen 1350.

The processor 1330 may include one or more processing cores. The multiple processing cores may be the first core controller and the second core controller. The processor 1330 connects various parts of the entire electronic device 1300 through various interfaces and lines. By running or executing instructions, programs, code sets, or instruction sets stored in the memory 1340 and calling data stored in the memory 1340, the processor 1330 performs various functions of the electronic device 1300 and processes data. In some embodiments, the processor 1330 may be implemented in at least one hardware form of Digital Signal Processing (DSP), Field-Programmable Gate Array (FPGA), and Programmable Logic Array (PLA). The processor 1330 may integrate one or a combination of Central Processing Unit (CPU), Graphics Processing Unit (GPU), Neural-network Processing Unit (NPU), and modem. Among these, the CPU primarily handles the operating system, user interface, and applications; the GPU is responsible for rendering and drawing content to be displayed on the screen 1350; the NPU implements Artificial Intelligence (AI) functions; the modem processes wireless communications. It should be noted that the aforementioned modem may not be integrated into the processor 1330 and may be implemented separately via a dedicated chip.

The memory 1340 may include Random Access Memory (RAM) and Read-Only Memory (ROM). In some embodiments, this memory 1340 includes a non-transitory computer-readable storage medium. The memory 1340 stores instructions, programs, code, code sets, or instruction sets. It includes a program storage area and a data storage area. The program storage area stores instructions for implementing the operating system, instructions for at least one function (e.g., touch control, audio playback, image display), and instructions for executing various method embodiments. The data storage area stores data generated during the use of the electronic device 1300 (e.g., audio data, contact lists).

The screen 1350 is a display component for presenting user interface. In some embodiments, this screen 1350 features touch functionality, allowing users to perform touch operations using fingers, styluses, or other suitable objects. The screen 1350 is typically located on a front panel of the electronic device 1300. It may be designed as a full screen, curved screen, irregular-shaped screen, dual-screen, or foldable screen. Combinations such as full screen with curved screen or irregular-shaped screen with curved screen are also possible, with no restrictions imposed by this embodiment.

Additionally, the electronic device 1300 may include more or fewer components than illustrated in the accompanying diagrams. Components may be combined or arranged differently. For example, it may incorporate audio collection devices, speakers, radio frequency circuits, input units, sensors, audio circuits, Wi-Fi modules, power supplies, Bluetooth modules, and other peripherals.

The embodiments of the present disclosure further provide a computer-readable medium storing at least one program code. This program code, when loaded and executed by the processor, implements the voice wake-up methods described in the preceding embodiments.

A computer program product is further provided, storing at least one program code. This program code, when loaded and executed by the processor, implements the voice wake-up methods described in the preceding embodiments.

In some embodiments, the computer program product may be deployed on an electronic device for execution, or on multiple electronic devices located at a single location, or on multiple electronic devices distributed across multiple locations and interconnected via a communication network. The multiple electronic devices distributed across multiple locations and interconnected via a communication network may form a blockchain system.

Those skilled in the art will appreciate that the functions described in the embodiments of the present disclosure may be implemented using hardware, software, firmware, or any combination thereof in one or more of the above examples. When implemented using software, these functions may be stored on a computer-readable medium or transmitted as one or more instructions or codes on a computer-readable medium. The computer-readable media include computer storage media and communication media, where the communication media include any media that facilitate the transmission of computer programs from one location to another. The storage media may be any available media accessible by general-purpose or specialized computers.

The above is only some embodiments of the present disclosure and is not intended to limit the present disclosure. Any modifications, equivalent replacements, improvements, etc. made within the spirit and principles of the present application should be included in the scope of the present disclosure.

## Claims

1. A voice wake-up method, performed by an electronic device; wherein the electronic device comprises a first core controller and a second core controller; the first core controller is configured to run a first operating system, and the second core controller is configured to run a second operating system; the voice wake-up method comprises:
obtaining first audio data based on the first operating system, in a case where the first operating system is in an active state and the second operating system is in a sleep state;
recognizing the first audio data based on a voice wake-up algorithm controlled by the first operating system; and
in a case where it is identified that the first audio data satisfies a wake-up condition, waking up the second operating system; wherein the second operating system is configured to, in an active state, respond to a voice control command corresponding to second audio data.

2. The method according to claim 1, wherein
the method further comprises: running the voice wake-up algorithm on the first core controller; or,
the electronic device further comprises an audio codec electrically connected to the first core controller, and the method further comprises: running the voice wake-up algorithm on the audio codec.

3. The method according to claim 2, wherein the first core controller is configured to run the voice wake-up algorithm; the electronic device further comprises an audio codec and a first audio collection component, an output end of the first audio collection component is electrically connected to an input end of the audio codec, and an output end of the audio codec is electrically connected to an input end of the first core controller;
wherein the obtaining first audio data based on the first operating system comprises:
obtaining a first sound signal collected by the first audio collection component through the audio codec, converting the first sound signal into the first audio data, and inputting the first audio data to the first core controller.

4. The method according to claim 3, wherein the obtaining a first sound signal collected by the first audio collection component through the audio codec comprises:
switching a working mode of the audio codec from a first working mode to a second working mode in a case where a preset condition for running the voice wake-up algorithm is satisfied; and
controlling the audio codec to obtain the first sound signal collected by the first audio collection component in the second working mode;
wherein power consumption of the audio codec in the second working mode is lower than power consumption of the audio codec in the first working mode.

5. The method according to claim 4, wherein the first core controller is configured to determine whether the preset condition for running the voice wake-up algorithm is satisfied, and the preset condition comprises at least one of:
a voice wake-up switch of the electronic device being in an on state;
control authority of the first audio collection component residing in the first core controller;
a screen of the electronic device being in a lit state; and
no voice task with a priority higher than a voice wake-up task existing.

6. The method according to claim 3, wherein after the waking up the second operating system, the audio codec is in an off state or a sleep state.

7. The method according to any one of claims 3-6, wherein the electronic device further comprises a switching switch, a fixed end of the switching switch is electrically connected to the output end of the first audio collection component, and a switching end of the switching switch is configured to be electrically connected to the second core controller or the audio codec;
the method further comprises:
controlling the switching end of the switching switch to switch from being electrically connected to the audio codec to being electrically connected to the second core controller; and
based on the second operating system run on the second core controller, receiving a second sound signal collected by the first audio collection component, converting the second sound signal into the second audio data, recognizing a voice control command corresponding to the second audio data, and responding to the voice control command.

8. The method according to any one of claims 3-6, wherein the electronic device further comprises a second audio collection component, and the second core controller is electrically connected to an output end of the second audio collection component;
the method further comprises:
based on the second operating system run on the second core controller, receiving a second sound signal collected by the second audio collection component, converting the second sound signal into the second audio data, recognizing a voice control command corresponding to the second audio data, and responding to the voice control command.

9. The method according to claim 2, wherein the audio codec is configured to run the voice wake-up algorithm, and the waking up the second operating system comprises:
sending a wake-up request to the second core controller through the audio codec; wherein the wake-up request is configured to request waking up the second operating system run on the second core controller; or,
sending a wake-up request to the first core controller through the audio codec, and forwarding the wake-up request to the second core controller by the first core controller; wherein the wake-up request is configured to request waking up the second operating system run on the second core controller.

10. The method according to claim 2, further comprising:
determining first operation condition information of the first core controller and second operation condition information of the audio codec; wherein the first operation condition information is configured to represent conditions for the first core controller to run the voice wake-up algorithm, and the second operation condition information is configured to represent conditions for the audio codec to run the voice wake-up algorithm;
in a case where the operation conditions represented by the first operation condition information are superior to the operation conditions represented by the second operation condition information, running the voice wake-up algorithm on the first core controller; and
in a case where the operation conditions represented by the first operation condition information are not superior to the operation conditions represented by the second operation condition information, running the voice wake-up algorithm on the audio codec.

11. The method according to claim 1, further comprising:
after the waking up the second operating system, switching the first operating system from the active state to a sleep state or a background running state.

12. The method according to claim 11, further comprising:
after the voice control command is completely processed, switching the first operating system from the sleep state to the active state, and switching the second operating system from the active state to the sleep state; or,
after the voice control command is completely processed, switching the first operating system from the background running state to a foreground running state, and switching the second operating system from the active state to the sleep state.

13. A voice wake-up apparatus, deployed in an electronic device; wherein the electronic device comprises a first core controller and a second core controller; the first core controller is configured to run a first operating system, and the second core controller is configured to run a second operating system; the voice wake-up apparatus comprises:
an obtaining module, configured to obtain first audio data based on the first operating system, in a case where the first operating system is in an active state and the second operating system is in a sleep state;
a recognition module, configured to recognize the first audio data based on a voice wake-up algorithm controlled by the first operating system; and
a wake-up module, configured to wake up the second operating system in a case where it is identified that the first audio data satisfies a wake-up condition; wherein the second operating system is configured to, in an active state, respond to a voice control command corresponding to second audio data.

14. The apparatus according to claim 13, wherein
the apparatus further comprises a first running module, configured to run the voice wake-up algorithm on the first core controller; or,
the electronic device further comprises an audio codec electrically connected to the first core controller; and the apparatus further comprises a second running module, configured to run the voice wake-up algorithm on the audio codec.

15. The apparatus according to claim 14, wherein the first core controller is configured to run the voice wake-up algorithm; the electronic device further comprises an audio codec and a first audio collection component, an output end of the first audio collection component is electrically connected to an input end of the audio codec, and an output end of the audio codec is electrically connected to an input end of the first core controller;
the obtaining module is configured to obtain a first sound signal collected by the first audio collection component through the audio codec, convert the first sound signal into the first audio data, and input the first audio data to the first core controller.

16. The apparatus according to claim 13, wherein the audio codec is configured to run the voice wake-up algorithm;
the wake-up module is configured to send a wake-up request to the second core controller through the audio codec, the wake-up request being configured to request waking up the second operating system run on the second core controller; or,
the wake-up module is configured to send a wake-up request to the first core controller through the audio codec, and forward the wake-up request to the second core controller by the first core controller, the wake-up request being configured to request waking up the second operating system run on the second core controller.

17. The apparatus according to claim 13, further comprising:
a determination module, configured to determine first operation condition information of the first core controller and second operation condition information of the audio codec; wherein the first operation condition information is configured to represent conditions for the first core controller to run the voice wake-up algorithm, and the second operation condition information is configured to represent conditions for the audio codec to run the voice wake-up algorithm;
a first running module, configured to, in a case where the operation conditions represented by the first operation condition information are superior to the operation conditions represented by the second operation condition information, run the voice wake-up algorithm on the first core controller; and
a second running module, configured to, in a case where the operation conditions represented by the first operation condition information are not superior to the operation conditions represented by the second operation condition information, run the voice wake-up algorithm on the audio codec.

18. An electronic device, comprising a first core controller and a second core controller; wherein the first core controller is configured to run a first operating system, and the second core controller configured to run a second operating system;
the electronic device further comprises one or more processors and one or more memories, the one or more memories storing at least one program code; wherein the at least one program code is configured to be loaded and executed by the one or more processors to perform the voice wake-up method according to any one of claims 1-12.

19. A computer-readable storage medium, storing at least one program code; wherein the at least one program code is configured to be loaded and executed by a processor to perform the voice wake-up method according to any one of claims 1-12.

20. A computer program product, storing at least one program code; wherein the at least one program code is configured to be loaded and executed by a processor to perform the voice wake-up method according to any one of claims 1-12.
